# EUROPEAN PATENT APPLICATION

(11) **EP 2 744 171 A1**
(43) Date of publication of application: **18.06.2014**
(21) Application number: 12306596.3
(22) Date of filing: 17.12.2012
(51) Int. Cl.: H04L 29/08

(54) **Collaboration between a telecommunication network and subscribers**

(71) Applicant: Alcatel Lucent, 75007 Paris (FR)
(72) Inventor: Soudani, Mounir, 91620 Nozay (FR); Toure, Famory, 91620 Nozay (FR)
(74) Representative: Mouney, Jérôme

(57) **Abstract**

For enhancing a collaboration between a telecommunication network (TN) and users that are subscribers of the telecommunication network, a social media server (SMS) being connected a communication device (CD) owned by a user that has provided an observation, an application server (AS) receives a notification (Not) sent by the social media server (SMS), the notification comprising the observation provided by the user and an identifier (IdU) of the user, interrogates a customer management server (CMS) in order to retrieve a profile associated with the user, determines a category of the observation made by the user, among predefined categories of positive feedback, negative feedback, and idea.

The application server further determines an action resulting from a function combining an analysis of the observation and an analysis of the profile of the user, and sends a message (Mes) to a management server (MS) selected according to the determined category of the observation, the message comprising the determined action to be performed by the management server.

## Description

### FIELD OF THE INVENTION

The present invention relates to collaboration between a telecommunication network and subscribers.

### BACKGROUND

Social Medias are powerful means of communication. They manage huge database containing hundreds of millions of individual profiles exposing their hobbies, work details, network connections, ideas and point of views about everything. These huge databases contain invaluable potential customers for service providers.

Actually, the customer is no more in a passive position receiving the official information from the traditional channels, like newspapers or television, but is now proactive and if he is happy or unhappy, he will say it on his favorite social media account to all or part of his contacts.

This new customer relationship channel can have a positive or a negative impact on a company brand. This impact can be high depending on the network size and influence of this customer.

There is a need to exploit the customer's feedback using social media for telecommunication companies.

Accordingly, a new and/or improved system and/or method is disclosed which addresses the above-referenced desire(s) and/or others.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for enhancing a collaboration between a telecommunication network and users that are subscribers of the telecommunication network, a social media server being connected a communication device owned by a user that has provided an observation, the method comprising the following steps in an application server able to communicate with the social media server through a telecommunication network:
receiving a notification sent by the social media server, the notification comprising the observation provided by the user and an identifier of the user,
interrogating a customer management server in order to retrieve a profile associated with the user,
determining a category of the observation made by the user, among predefined categories of positive feedback, negative feedback, and idea,
determining an action resulting from a function combining an analysis of the observation and an analysis of the profile of the user,
sending a message to a management server selected according to the determined category of the observation, the message comprising the determined action to be performed by the management server.

Aadvantageously, the invention offers the possibility to map and to join the usage and subscription data coming from OSS/BSS system with social media data. The social media data can be integrated in the subscription and usage data flow. It offers also the possibility to leverage telecommunication network capabilities and to define a new model based on collaborative social communication:
- subscribers rewarding when posting positive feedbacks attracting their contacts, friends and families;
- define corrective and preventive actions based on constructive remarks collected from social media,
- defining a new channel for open innovation based on collecting ideas from specific population categories like geeks, technophiles, high consumers.

Additionally, the invention promotes the telecommunication network brand, by encouraging the subscribers to post positive feedback on social media when they are satisfied and attract new subscribers.

In an embodiment, the social media server provides a web service that allows users to provide observations about products or services of the telecommunication network through a dedicated interface.
In an embodiment, the social media server checks if the user having provided the observation is subscriber of the telecommunication network by comparing an identifier provided by the user to predefined sets of identifiers.
In an embodiment, the selected management server is included in the Operation Support System and Business Support System of the telecommunication network.
In an embodiment, if the observation is determined as a positive feedback, the message comprises an identifier of the user and is sent to a billing server, and the action to be performed by the billing server is to generate an award for the user.
In an embodiment, if the observation is determined as a negative feedback, the message comprises the observation and is sent to a server dedicated to problem management, and the action to be performed by the server is to create a ticket dedicated to a problem resulting from the observation.
In an embodiment, if the observation is determined as an idea, the message comprises the observation and is sent to a server dedicated to knowledge management, and the action to be performed by the server is to create a post describing an idea.

A further object of the invention is an application server for enhancing a collaboration between a telecommunication network and users that are subscribers of the telecommunication network, a social media server being connected a communication device owned by a user that has provided an observation, the application server being able to communicate with the social media server through a telecommunication network, the application server comprising:
means for receiving a notification sent by the social media server, the notification comprising the observation provided by the user and an identifier of the user,
means for interrogating a customer management server in order to retrieve a profile associated with the user,
means for determining a category of the observation made by the user, among predefined categories of positive feedback, negative feedback, and idea,
means for determining an action resulting from a function combining an analysis of the observation and an analysis of the profile of the user,
means for sending a message to a management server selected according to the determined category of the observation, the message comprising the determined action to be performed by the management server.

The invention relates further to a computer program adapted to be executed in a server for performing a transfer of credit, said program including instructions which, when the program is executed in said server, execute the steps of the method of the invention.

### BRIEF DESCRIPTION OF THE FIGURES

Some embodiments of the present invention are now described, by way of example only, and with reference to the accompanying drawings, in which:
- FIG. 1 is a schematic block-diagram of a communication system according to an embodiment of the invention,
- FIG. 2 is a flowchart showing steps performed to execute a method for enhancing a collaboration between a telecommunication network and subscribers according to an embodiment of the invention.

The same reference number represents the same element or the same type of element on all drawings.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

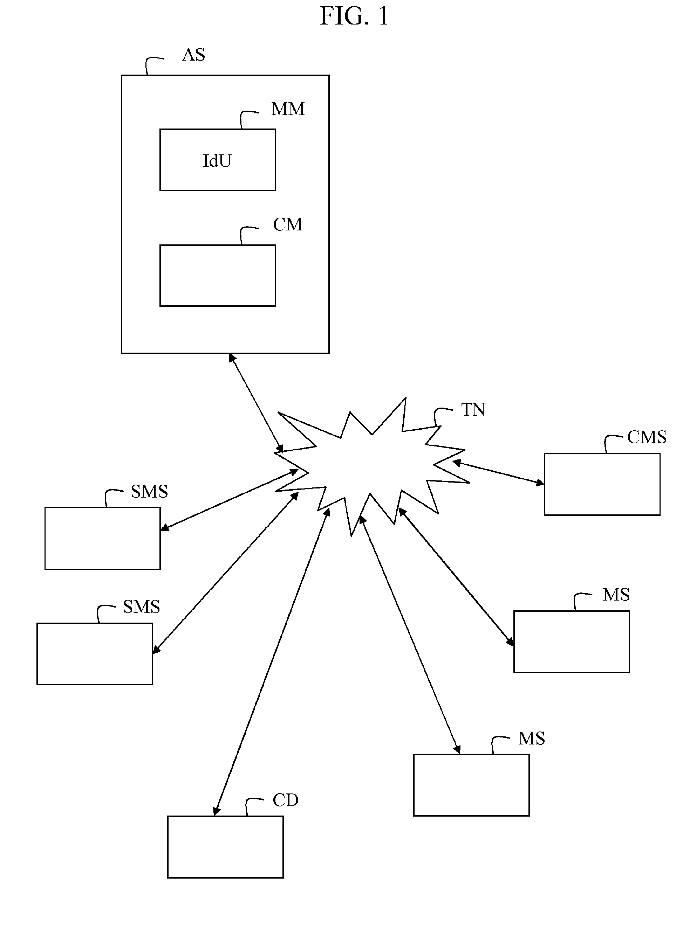

Referring to FIG. 1, a communication system comprises a set of communication devices CD able to communicate with a set of social media servers SMS application connected to an application server AS which is also connected to a customer management server CMS and management servers MS of a telecommunication network TN.

The telecommunication network TN may be a wired or wireless network, or a combination of wired and wireless networks.

The telecommunication network TN can be a packet network, for example, an IP ("Internet Protocol") high-speed network such as the Internet or an intranet, or even a company-specific private network.

Each communication device CD can be a mobile terminal or a fixed terminal.

As mobile terminal, the communication device can be a radio communication mobile terminal. For example, the communication device is a mobile phone, or is a communicating Personal Digital Assistant PDA, or an intelligent telephone like SmartPhone.

In another example, the communication device is connected to a base station of a public wireless network of limited scope, such as WLAN (Wireless Local Area Network) or conforming to a standard 802.1x, or medium range according to the protocol WiMAX (World Wide Interoperability Microwave Access).

In an example, the communication device is a cellular mobile radio communication terminal, connected by a channel to a radio access network comprising the network of a fixed radio communication network, eg GSM (Global System for Mobile communications) or UMTS (Universal Mobile Telecommunications System) or LTE (Long Term Evolution).

In another example, the communication device is a cellular mobile radio communication terminal, connected by a channel to a radio access network through a femto base station.

As fixed terminal, the communication device can be a personal computer connected directly via a modem to link of type xDSL (Digital Subscriber Line) or ISDN (Integrated Services Digital Network Services) connected to the packet network.

It is considered that a communication device is owned by a user who is a subscriber of the telecommunication network and who is providing observations about products or services of the telecommunication network by means of the communication device through a social media server SMS.

A social media server SMS provides a web service that allows users to provide observations about products or services of the telecommunication network through a dedicated interface. For example, the web service corresponds to a social network, a group of discussion in a forum, or a blog.

In order to not encumber FIG. 1, only two social media servers SMS are represented.

It is assumed the social media server SMS comprises a notification engine relaying observations made by users to the application server AS. For example, once a user has validated an entered observation, the social media server SMS sends a message to the application server AS, the message comprising the content of the observation and an identifier of the user.

A management server MS is included in the OSS (Operation Support System) and BSS (Business Support System) of the telecommunication network. For instance, the OSS supports processes such as maintaining network inventory, provisioning services, configuring network components, and managing faults, and the BSS supports processes such as taking orders, processing bills, and collecting payments.

For example, a management server MS is a server dedicated to billing or charging process, to trouble ticketing or knowledge management.

In order to not encumber FIG. 1, only two management server MS are represented.

A customer management server CMS is dedicated to customer relationship management and contains profiles of users that are subscribers of the telecommunication network. The customer management server CMS is also included in the OSS (Operation Support System) and BSS (Business Support System) of the telecommunication network.

The profile of a user may contain different kinds of information on the user, like rank of a user, the influence of the user through predefined social media, or category of user.

The application server AS comprises a messaging module MM and a controlling module CM.

The messaging module MM memorizes a set of identifiers IdU for each user that is subscriber of the telecommunication network, optionally in correspondence with a call number associated with the communication device CD in case this latter is a mobile terminal.

The messaging module MM acts as an interface handling exchange of messages with social media servers SMS, management servers MS and the customer management server CMS. The messaging module MM is able to communicate with social media server SMS in order to receive from them messages comprising observations made by users. The messaging module MM is able to communicate with the customer management server CMS in order to retrieve profiles of users. The messaging module MM is able to communicate with a selected management server MS in order to trigger an action based on an analysis of observations made by a user.

The controlling module CM performs analysis of observations made by a user, in view of information extracted from a profile retrieved from the customer management server CMS.

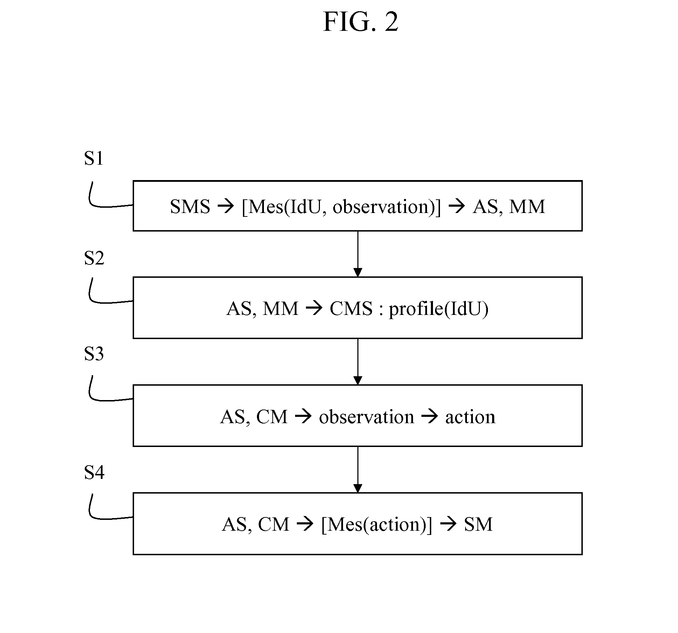

With reference to FIG. 2, a method for enhancing collaboration between a telecommunication network and users that are subscribers of the telecommunication network according to one embodiment of the invention comprises steps S1 to S4 executed automatically within the communication system.

At step S1, a social media server SMS analyses observations provided by users and checks if there are users that are subscribers of the telecommunication network. For example, the social media server SMS compares an identifier IdU provided by the user to predefined sets of identifiers. The identifier IdU can be a login for instance.

When the social media server SMS retrieves an observation provided by a user that is subscriber of the telecommunication network, it sends a notification Not to the application server AS, the notification Not comprising said observation and the identifier IdU of the user.

At step S2, the messaging module MM of the application server AS interrogates the customer management server CMS in order to retrieve a profile associated with the user, by means of the identifier IdU of the user.

At step S3, the controlling module CM of the application server AS performs analysis of the observation made by a user, in view of information extracted from a profile retrieved from the customer management server CMS.

In particular, the controlling module CM determines a category of the observation made by the user, among predefined categories of positive feedback, negative feedback, and idea. If the observation does not fit any of the categories, the observation is dropped and the method stops.

For each determined category, the controlling module CM determines an action resulting from a function combining an analysis of the observation and an analysis of the profile of the user.

For instance, the analysis of the observation can be based on keywords or on a semantic analysis, taking into account a degree of interest or severity of the observation meaning, the topic or the object related to the observation, the number of other users to which the observation can be addressed.

For instance, the analysis of the profile of the user can take into account an influence of the user through the social media, for example based on score of the user predefined by the social media server, a number of contacts of the user, a category of the user associated with the social media.

For example, if the observation is determined as a positive feedback, the controlling module CM, an action is determined as a result of an analysis of the observation taking into account interest, leads relating to the observation and of an analysis of the user profile taking into account a rank, an influence, and a category of the user.

For example, if the observation is determined as a negative feedback, the controlling module CM, an action is determined as a result of an analysis of the observation taking into account severity relating to the observation and of an analysis of the user profile taking into account a rank, an influence, and a category of the user.

For example, if the observation is determined as an idea, the controlling module CM, an action is determined as a result of an analysis of the observation taking into account interest relating to the observation and of an analysis of the user profile taking into account a rank and a category of the user.

At step S4, the controlling module CM sends a message Mes to a management server MS selected according to the determined category of the observation, the message comprising action to be performed by the management server MS.

If the observation is determined as a positive feedback, the message Mes comprises an identifier of the user and is sent to a billing server. The billing server is adapted to generate stimuli/incentives tailored for the user, for example dependent upon the level and type of use of voice and or data services by the user and taking into account possibilities according to the user subscription, if this latter is a prepaid or postpaid subscription. In this case, the action to be performed by the billing server is to generate an award for the user.

If the user has a postpaid subscription, the incentive is applied by a billing system, and if the user has a prepaid subscription, the incentive is applied by a charging system.

The billing server can be assimilated to an online charging server or a loyalty management server, depending on the case of prepaid or postpaid subscription.

If the observation is determined as a negative feedback, the message Mes comprises the observation and optionally identifiers of the user and is sent to a server dedicated to problem management. In this case, the action to be performed by the server is to open a ticket dedicated to a problem resulting from the observation.

If the observation is determined as an idea, the message Mes comprises the observation and optionally identifiers of the user and is sent to a server dedicated to knowledge management. In this case, the action to be performed by the server is to create a post describing an idea.

An incentive or rewarding can be applied in this case as recognition for the contribution.

In all cases, an identifier of the user is an identifier used by the OSS/BSS system and may be an assigned number or a number related to the mobile terminal MT, such as the call number or the IMEI (International Mobile Equipment Identity).

The invention described here relates to a method and a server for enhancing collaboration between a telecommunication network and subscribers. In an embodiment, the steps of the method of the invention are determined by the instructions of a computer program incorporated in a server such as the application server AS according to the invention. The program includes program instructions which, when said program is executed in a processor of the server the operation whereof is then controlled by the execution of the program, execute the steps of the method according to the invention.

As a consequence, the invention applies also to a computer program, in particular a computer program on or in an information medium readable by a data processing device, adapted to implement the invention. That program may use any programming language and be in the form of source code, object code or an intermediate code between source code and object code, such as a partially compiled form, or in any other desirable form for implementing the method according to the invention.

The information medium may be any entity or device capable of storing the program. For example, the medium may include storage means or a recording medium on which the computer program according to the invention is recorded, such as a ROM, for example a CD ROM or a microelectronic circuit ROM, or a USB key, or magnetic recording means, for example a diskette (floppy disk) or a hard disk.

## Claims

1. A method for enhancing a collaboration between a telecommunication network (TN) and users that are subscribers of the telecommunication network, a social media server (SMS) being connected a communication device (CD) owned by a user that has provided an observation, the method comprising the following steps in an application server (AS) able to communicate with the social media server (sums) through a telecommunication network (TN):
receiving (S1) a notification (Not) sent by the social media server (SMS), the notification comprising the observation provided by the user and an identifier (IdU) of the user,
interrogating (S2) a customer management server (CMS) in order to retrieve a profile associated with the user,
determining (S3) a category of the observation made by the user, among predefined categories of positive feedback, negative feedback, and idea,
determining (S3) an action resulting from a function combining an analysis of the observation and an analysis of the profile of the user,
sending (S4) a message (Mes) to a management server (MS) selected according to the determined category of the observation, the message comprising the determined action to be performed by the management server (MS).

2. A method according to claim 1, wherein the social media server (SMS) provides a web service that allows users to provide observations about products or services of the telecommunication network through a dedicated interface.

3. A method according to claim 1 or 2, wherein the social media server (SMS) checks if the user having provided the observation is subscriber of the telecommunication network by comparing an identifier provided by the user to predefined sets of identifiers.

4. A method according to any of claims 1 to 3, wherein the selected management server (MS) is included in the Operation Support System and Business Support System of the telecommunication network (TN).

5. A method according to any of claims 1 to 4, wherein, if the observation is determined as a positive feedback, the message (Mes) comprises an identifier of the user and is sent to a billing server, and the action to be performed by the billing server is to generate an award for the user.

6. A method according to any of claims 1 to 4, wherein, if the observation is determined as a negative feedback, the message (Mes) comprises the observation and is sent to a server dedicated to problem management, and the action to be performed by the server is to create a ticket dedicated to a problem resulting from the observation.

7. A method according to any of claims 1 to 4, wherein, if the observation is determined as an idea, the message (Mes) comprises the observation and is sent to a server dedicated to knowledge management, and the action to be performed by the server is to create a post describing an idea.

8. Application server (AS) for enhancing a collaboration between a telecommunication network (TN) and users that are subscribers of the telecommunication network, a social media server (SMS) being connected a communication device (CD) owned by a user that has provided an observation, the application server (AS) being able to communicate with the social media server (SMS) through a telecommunication network, the application server (AS) comprising:
means (MM) for receiving a notification (Not) sent by the social media server (SMS), the notification comprising the observation provided by the user and an identifier (IdU) of the user,
means (MM) for interrogating (S2) a customer management server (CMS) in order to retrieve a profile associated with the user,
means (CMS) for determining (S3) a category of the observation made by the user, among predefined categories of positive feedback, negative feedback, and idea,
means (CM) for determining an action resulting from a function combining an analysis of the observation and an analysis of the profile of the user,
means (CM) for sending a message (Mes) to a management server (MS) selected according to the determined category of the observation, the message comprising the determined action to be performed by the management server (MS).

9. A computer program adapted to be executed in an application server (AS) for enhancing a collaboration between a telecommunication network (TN) and users that are subscribers of the telecommunication network, a social media server (SMS) being connected a communication device (CD) owned by a user that has provided an observation, the application server (AS) being able to communicate with the social media server (SMS) through a telecommunication network, said program including instructions which, when said program is executed in said application server, execute the following steps :
receiving (S1) a notification (Not) sent by the social media server (SMS), the notification comprising the observation provided by the user and an identifier (IdU) of the user,
interrogating (S2) a customer management server (CMS) in order to retrieve a profile associated with the user,
determining (S3) a category of the observation made by the user, among predefined categories of positive feedback, negative feedback, and idea,
determining (S3) an action resulting from a function combining an analysis of the observation and an analysis of the profile of the user,
sending (S4) a message (Mes) to a management server (MS) selected according to the determined category of the observation, the message comprising the determined action to be performed by the management server (MS).
